# EUROPÄISCHE PATENTSCHRIFT

(11) **EP 3 138 449 B1**
(45) Veröffentlichungstag und Bekanntmachung des Hinweises auf die Patenterteilung: **09.10.2019**
(21) Anmeldenummer: 16185441.9
(22) Anmeldetag: 24.08.2016
(51) Int. Cl.: A47J 31/44

(54) **KAFFEEAUTOMAT**
COFFEE MACHINE
MACHINE À CAFÉ

(30) Priorität: 03.09.2015 DE 102015216936
(43) Veröffentlichungstag der Anmeldung: 08.03.2017
(73) Patentinhaber: BSH Hausgeräte GmbH, 81739 München (DE)
(72) Erfinder: Strobl, Robert, 83246 Unterwössen (DE); Huber, Michael, 6341 Ebbs (AT); Haslacher, Christian, 5303 Thalgau (AT); Ostermaier, Albert, 83371 Stein a.d. Traun (DE); Haas, Michael, 88279 Amtzell (DE)

(56) Entgegenhaltungen:
- WO-A1-2011/012489
- WO-A1-2014/127848
- DE-U1-202010 000 024

## Beschreibung

Die vorliegende Erfindung betrifft einen Kaffeeautomaten mit einem Gehäuse, einer Brüheinheit sowie mit einer Tropfschale und einem Tresterbehälter gemäß dem Oberbegriff des Anspruchs 1.

Gattungsgemäße Kaffeeautomaten sind hinlänglich bekannt und besitzen vergleichsweise hohe Tresterbehälter, welche entweder nach vorne oder seitlich aus dem Kaffeeautomaten entnommen werden können. In dem Tresterbehälter wird der anfallende Trester gestapelt bzw. zu einer Art Kegel aufgeschichtet. Bevor dieser Tresterstapel bzw. Tresterkegel die Höhe des Tresterbehälters übersteigt, sollte er entnommen werden, um bei einem Entnehmen des Tresterbehälters den überstehenden Tresterkuchenanteil nicht im Gerät zu verteilen und dieses dadurch zu verschmutzen. Die Ermittlung dieses Zeitpunktes wird dabei üblicherweise mittels eines Zählers bewerkstelligt. Nach Erreichen einer bestimmten Anzahl an Brühungen, wobei gegebenenfalls auch die jeweilige Pulvermengeneinstellung berücksichtigt werden kann, erhält der Bediener die Meldung, dass der Tresterbehälter entleert werden muss. Um den Tresterbehälter entnehmen zu können, muss üblicherweise ein Teil einer Frontfläche oder einer Seitenfläche des Kaffeeautomaten entnehmbar bzw. schwenkbar ausgebildet sein. Die Front- bzw. Seitenfläche wird dabei normalerweise mittels eines Dekorelements überdeckt, welches entweder direkt am Tresterbehälter angebracht oder mittels separater, entnehmbarer Blenden realisiert wird. Generell ist jedoch die zur Entnahme des Tresterbehälters erforderliche Konstruktion aufwändig, insbesondere im Hinblick auf Dekorelemente und schafft zudem eine unschöne Trennkante in der Mitte der Gerätefront.

Kaffeeautomaten mit einem entnehmbaren Tresterbehälter als Tresterschale sind beispielsweise bekannt aus den Druckschriften DE 20 2010 000024 U1, WO 2014/127848 A1 und WO 2011/012489 A1.

Die vorliegende Erfindung beschäftigt sich daher mit dem Problem, für einen Kaffeeautomaten der gattungsgemäßen Art eine verbesserte oder zumindest eine alternative Ausführungsform anzugeben, die die aus dem Stand der Technik bekannten Nachteile vermeidet.

Dieses Problem wird erfindungsgemäß durch den Gegenstand des unabhängigen Anspruchs
1 gelöst. Vorteilhafte Ausführungsformen sind Gegenstand der abhängigen Ansprüche. Die vorliegende Erfindung beruht auf dem allgemeinen Gedanken, erstmals und abweichend von der bisherigen Gestaltungsweise, keinen schmalen und hohen Tresterbehälter in einem Kaffeeautomaten mehr vorzusehen, sondern den Tresterbehälter als vergleichsweise flache und eine größere Grundfläche bedeckende Tresterschale auszubilden, wodurch es möglich ist, diese hinter einer ohnehin vorhandenen Tropfschale anzuordnen und dadurch bauraumoptimiert unterzubringen. Der erfindungsgemäße Kaffeeautomat weist dabei ein Gehäuse, eine Brüheinheit sowie eine Tropfschale mit der als Tresterbehälter ausgebildeten Tresterschale auf, wobei die Tresterschale rückwärtig an der Tropfschale befestigt ist, so dass diese gemeinsam aus dem Gehäuse entfernt und wieder in dieses eingesetzt werden können. Die Tresterschale besitzt dabei im Wesentlichen die Höhe der Tropfschale und umfasst ein vorderes und ein hinteres Segment, wobei bei eingebauter Tropf- und Tresterschale oberhalb des vorderen Segments der Tresterschale ein Trestersammelraum angeordnet ist, in welchem die einzelnen aus einer Brüheinheit ausgeworfenen Tresterkuchen gesammelt werden. Dieser Trestersammelraum besitzt an einem in Auszugsrichtung der Tropfschale unteren und vorderen Bereich eine Abstreifkante, so dass bei einem Herausziehen der Tropf- und Tresterschale ein im Trestersammelraum angesammelter Tresterkuchenstapel über die Abstreifkante auf das vordere und hintere Segment der Tresterschale verteilt wird. Im Unterschied zu bisherigen Kaffeeautomaten wird somit der Tresterkuchenstapel nicht mehr unversehrt aus dem Kaffeeautomaten entnommen, sondern über die Abstreifkante vorzugsweise über die gesamte Fläche der Tresterschale gleichmäßig verteilt. Mit der erfindungsgemäß ausgebildeten Tresterschale ist es zudem möglich, geringere Auslaufhöhen realisieren zu können, wodurch ein Kaffeeauslauf näher an niedrige Tassen herangeführt und dadurch Spritzer vermieden werden können. Zudem ist auch ein größerer Verfahrbereich in Bezug auf eine Höhenverstellung des Kaffeeauslaufes möglich. Von weiterem besonderem Vorteil bei dem erfindungsgemäßen Kaffeeautomaten ist, dass keine zusätzliche Abdeckung für den Tresterbehälter mehr erforderlich ist, wodurch eine beträchtliche Kosteneinsparung gegeben ist. Auch in designerischer Hinsicht bietet der erfindungsgemäße Kaffeeautomat einen wesentlichen Vorteil, da die bislang an einer Frontseite oder einer Seitenfläche auftretende Trennkante nun nicht mehr vorhanden ist.

Bei einer vorteilhaften Weiterbildung der erfindungsgemäßen Lösung sind die Tropfschale und die Tresterschale voneinander trennbar ausgebildet. Hierdurch lässt sich ein besonders leichtes Entleeren der Tresterschale erreichen, ohne dass beispielsweise die Tropfschale und darin enthaltene Flüssigkeitsreste entleert werden müssten. Eine Verbindung zwischen der Tresterschale und der Tropfschale kann beispielsweise über eine Klemm oder Clipsverbindung geschaffen werden, welche einerseits leicht zu lösen und zu fixieren sind und andererseits eine zuverlässige Verbindung zwischen der Trester- und der Tropfschale gewährleisten.

Bei einer weiteren vorteilhaften Ausführungsform der erfindungsgemäßen Lösung ist die Abstreifkante lösbar am Gehäuse des Kaffeeautomaten befestigt. Hierdurch ist es möglich, nach Entfernen der Tresterschale die Abstreifkante ebenfalls auszubauen und zu reinigen, wodurch eine Reinigung des Kaffeeautomaten insgesamt einfacher bewerkstellig werden kann.

Zweckmäßig ist an der Tropfschale ein Tassenpodest angeordnet. Das Tassenpodest und die Tropfschale können darüber hinaus einteilig, insbesondere sogar einstückig, ausgebildet sein. Hierdurch kann eine zusätzliche Funktionsintegration im Bereich der Tropfschale geschaffen werden, welche zugleich ein Tassenpodest umfasst, wobei das Tassenpodest beispielsweise nach oben mittels eines entsprechenden Gitterrosts abgedeckt ist. Durch die einteilige bzw. einstückige Ausbildung des Tassenpodests und der Tropfschale kann eine besonders wirtschaftliche Fertigung erreicht werden.

Bei einer weiteren vorteilhaften Ausführungsform der erfindungsgemäßen Lösung ist die Abstreifkante im Querschnitt kreissegmentförmig ausgebildet. Dies bewirkt bei einem Herausziehen der Tropf- und Tresterschale aus dem Kaffeeautomaten nicht nur ein Verteilen des Tresterkuchenstapels, sondern zugleich auch ein Verdichten der in den einzelnen Segmenten der Tresterschale angeordneten Tresterkuchen, wodurch das zur Aufnahme der Tresterkuchen vorhandene Volumen in der Tresterschale besonders gut ausgenutzt werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Schnittdarstellung durch einen erfindungsgemäßen Getränkeautomaten mit montierter Tropf- und Tresterschale,
- Fig. 2: eine Darstellung wie in Fig. 1, jedoch bei zumindest teilweise herausgezogener Tropf- und Tresterschale,
- Fig. 3: eine Schrägansicht von oben auf die erfindungsgemäße Tropf- und Tresterschale,
- Fig. 4: eine Darstellung wie in Fig. 3, jedoch in einer Explosionsdarstellung.

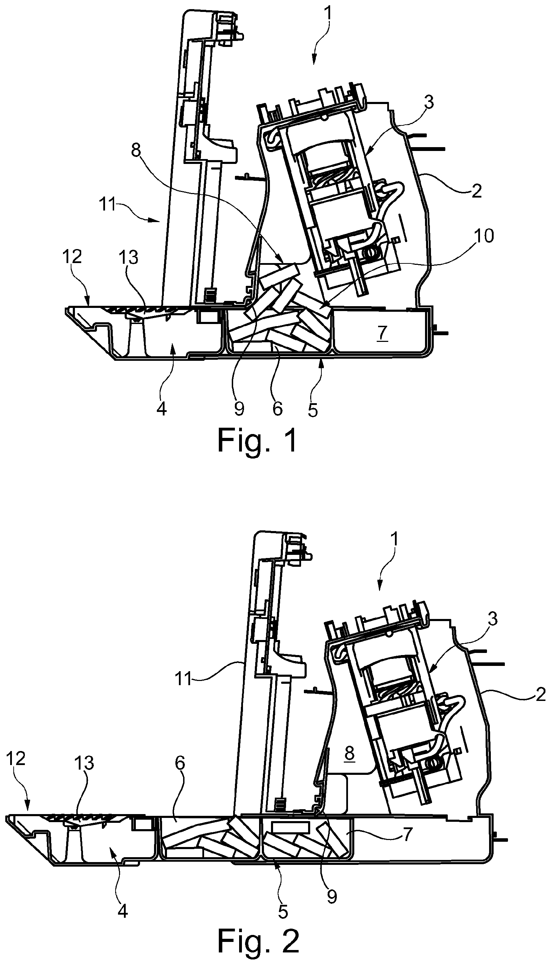

Entsprechend den Fig. 1 und 2, weist ein erfindungsgemäßer Kaffeeautomat 1 ein Gehäuse 2, eine Brüheinheit 3 sowie eine Tropfschale 4 auf. Ebenfalls vorgesehen ist den als Tresterschale 5 ausgebildeter Tresterbehälter, der rückwärtig an der Tropfschale 4 befestigt ist, so dass diese, wie dies gemäß der Fig. 2 dargestellt, gemeinsam aus dem Gehäuse 2 herausgezogen und wieder in dieses eingeschoben werden können. Die Tresterschale 5 weist dabei im Wesentlichen die gleiche Höhe der Tropfschale 4 auf und besitzt ein vorderes Segment 6 sowie ein hinteres Segment 7. Im Vergleich zu bisherigen, schmalen und hohen Tresterbehältern, ist die erfindungsgemäße Tresterschale 5 flach, das heißt nieder und mit einer großen Grundfläche ausgebildet.

Bei in das Gehäuse 2 eingesetzter Tropf- und Tresterschale 4, 5 ist oberhalb des vorderen Segments 6 der Tresterschale 5 ein Trestersammelraum 8 angeordnet, der unten in einem in Auszugsrichtung der Tropf- und Tresterschale 4, 5 vorderen Bereich eine Abstreifkante 9 besitzt. Diese Abstreifkante 9 bewirkt bei einem Herausziehen der Tropf- und Tresterschale 4, 5, dass ein im Trestersammelraum 8 angesammelter Tresterkuchenstapel 10 über die Abstreifkante 9 auf das vorderer und hintere Segment 6, 7 der Tresterschale 5 verteilt und zudem in diesen Segmenten 6 7 verdichtet wird.

Die erfindungsgemäße Tresterschale 5 bietet dabei den großen Vorteil, dass diese ein vergleichsweise großes zur Aufnahme von Tresterkuchen 10 zur Verfügung stehendes Volumen schafft, welches gleichzeitig bauraumoptimiert im Gehäuse 2 des Kaffeeautomaten 1 angeordnet ist. Bislang war ein Tresterbehälter in der Art lediglich des vorderen Segments der Tresterschale 5 mit jedoch deutlich höheren Seitenwänden ausgebildet, was dazu führte, dass an einer Frontseite 11 ein abnehmbares Dekorelement vorgesehen werden musste, welches zur Entnahme des Tresterbehälters abgenommen werden musste. Dieses Dekorelement ging über eine entsprechende Trennfuge bzw. Trennkante in die benachbarte Frontseite 11 über, was eine optische Beeinträchtigung darstellte. Mit dem erfindungsgemäß als Tresterschale 5 ausgebildeten Tresterbehälter kann dieses Problem komplett gelöst werden, da die Tresterschale 5 nun nicht mehr höher ist als die eigentliche Tropfschale 4. Ein Entfernen der Tropf- und Tresterschale 4, 5 erfordert dabei insbesondere kein vorheriges Entfernen eines Dekorelements oder ähnlichem. Durch den Wegfall eines derartigen Blend- oder Dekorelements sowie durch den weiteren Wegfall einer zusätzlichen Abdeckung für den Tresterbehälter, kann eine nicht unbeachtliche Kostenreduzierung erreicht werden.

An der Tropfschale 4 kann darüber hinaus ein Tassenpodest 12 angeordnet oder in die Tropfschale 4 integriert sein. Das Tassenpodest 12 weist dabei einen Rost 13 auf, auf welchem die Tassen abstellbar sind und welcher für Flüssigkeit durchlässig ist, so dass beabsichtigt oder unbeabsichtigt auf den Rost 13 treffende Flüssigkeit, beispielsweise von einem darüber angeordneten Kaffeeauslauf, in die darunter angeordnete Tropfschale 4 abfließen kann.

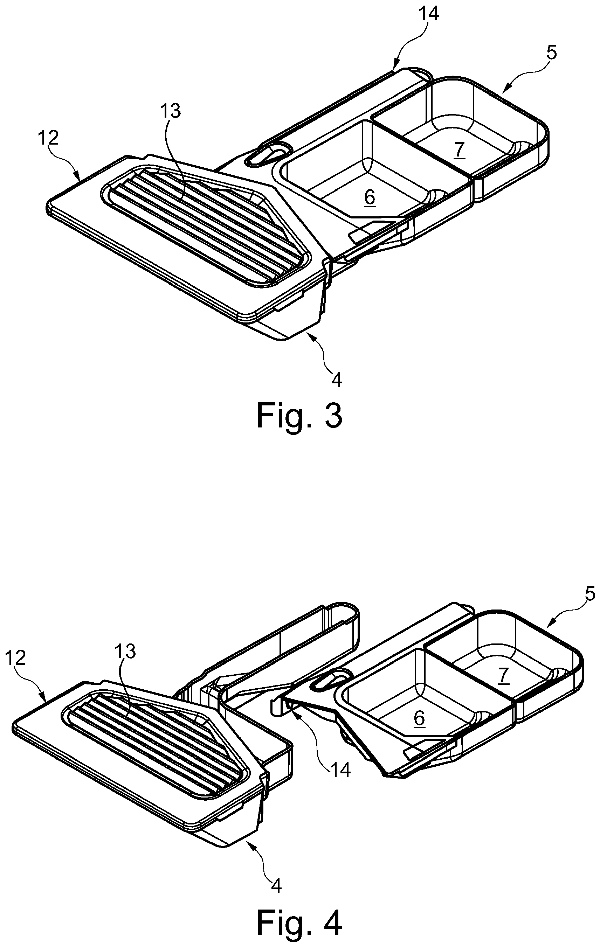

Betrachtet man die Fig. 3 und 4, so kann man erkennen, dass die Tropfschale 4 und die Tresterschale 5 voneinander trennbar ausgebildet sind, wodurch eine erleichterte Reinigung und insbesondere auch ein getrenntes Entleeren der Tropfschale und der Tresterschale 5 möglich sind. Eine Verbindung zwischen der Tropfschale 4 und der Tresterschale 5 kann dabei beispielsweise über eine Klemm- oder Clipsverbindung 14 erfolgen. Die Tropfschale 4 und das Tassenpodest 12 sind dabei einteilig, insbesondere sogar einstückig, ausgebildet, wodurch deren Herstellung deutlich vereinfacht wird und kostengünstiger gestaltet werden kann.

Betrachtet man die Abstreifkante 9, so ist diese vorzugsweise lösbar am Gehäuse 2 angeordnet, wodurch die Abstreifkante 9 bei entnommener Tresterschale 5 ebenfalls leicht entnommen und leicht gereinigt werden kann. Zudem weist die Abstreifkante 9 eine im Querschnitt kreissegmentartige Form auf, bei einem Herausziehen der Tropf- und Tresterschale 4, 5 zu einem Eindrücken der einzelnen Tresterkuchen in die jeweiligen Segmente 6, 7 der Tresterschale 5 führt, wodurch die Tresterkuchen in den Segmenten 6, 7 zusätzlich verdichtet und ein zur Aufnahme der Tresterkuchen zur Verfügung stehendes Volumen besser ausgenutzt werden kann.

Mit dem erfindungsgemäßen Kaffeeautomaten 1 kann insbesondere ein Bauraumbedarf des gesamten Systems "Tropfschale 4 und Tresterschale 5" reduziert werden, wobei zusätzlich eine bislang erforderliche Abdeckung für einen Tresterbehälter entfallen kann und zu einer Kostenreduzierung führt. Durch die vergleichsweise geringe Höhe der Trester schale 5 kann auch ein größerer Verfahrbereich (Höhenverstellung) des Kaffeeauslaufs realisiert werden, so dass ein Kaffeeauslauf beispielsweise auch näher an niedrige Tassen herangeführt werden kann, wodurch beispielsweise Spritzer vermieden werden können.

Eine Entnahme der Tropf- und Tresterschale 4, 5 kann auch in der tiefsten Auslaufposition erfolgen, was bei bisherigen Kaffeeautomaten nicht möglich war. Von besonderem designerischen Vorteil ist darüber hinaus, dass die bislang an einer Frontseite 11 erforderliche Trennfuge nicht mehr vorhanden ist, so dass eine geschlossene Frontseite 11 geschaffen werden kann. Hierdurch ergehen sich größere und dadurch auch leichter zu reinigende Flächen. Insbesondere kann auch ein bislang an der Frontseite 11 eingesetztes Dekorelement entfallen. Durch die Entnahme der Tresterschale 5 zusammen mit der Tropfschale 4 kann auch ein Leeren der Tresterschale 5 bzw. der Tropfschale 4 vereinfacht werden, da insbesondere nicht zuvor ein Entfernen der Tropfschale 4 und eines Dekorelements an einer Frontseite erforderlich sind.

### Bezugszeichenliste

- 1: Kaffeeautomat
- 2: Gehäuse
- 3: Brüheinheit
- 4: Tropfschale
- 5: Tresterschale
- 6: vorderes Segment der Tresterschale
- 7: hinteres Segment der Tresterschale
- 8: Trestersammelraum
- 9: Abstreifkante
- 10: Tresterkuchenstapel
- 11: Frontseite
- 12: Tassenpodest
- 13: Rost
- 14: Klemm- oder Clipsverbindung

## Patentansprüche

1. Kaffeeautomat (1) mit einem Gehäuse (2), einer Brüheinheit (3) sowie mit einer Tropfschale (4) und einem Tresterbehälter, wobei der Tresterbehälter als Tresterschale (5) ausgebildet und rückwärtig an der Tropfschale (4) befestigt ist, so dass diese gemeinsam aus dem Gehäuse (2) entfernt und wieder in dieses eingesetzt werden können, **dadurch gekennzeichnet, dass** die Tresterschale (5) im Wesentlichen die Höhe der Tropfschale (4) aufweist und ein vorderes und hinteres Segment (6,7) umfasst und wobei bei eingebauter Tropf- und Tresterschale (4,5) oberhalb des vorderen Segments (6) der Tresterschale (5) ein Trestersammelraum (8) angeordnet ist, der unten eine Abstreifkante (9) aufweist, sodass bei einem Herausziehen der Tropf- und Tresterschale (4,5) ein im Trestersammelraum (8) gesammelter Tresterkuchenstapel (10) über die Abstreifkante (9) auf das vordere und hintere Segment (6,7) der Tresterschale(5) verteilt wird.

2. Kaffeeautomat nach Anspruch 1, **dadurch gekennzeichnet, dass** die Tropfschale (4) und die Tresterschale (5) voneinander trennbar ausgebildet sind.

3. Kaffeeautomat nach Anspruch 1 oder 2, **dadurch gekennzeichnet, dass** die Abstreifkante (9) lösbar am Gehäuse (2) des Kaffeeautomaten (1) befestigt ist.

4. Kaffeeautomat nach einem der Ansprüche 1 bis 3, **dadurch gekennzeichnet, dass** an der Tropfschale (4) ein Tassenpodest (12) angeordnet ist.

5. Kaffeeautomat nach Anspruch 3, **dadurch gekennzeichnet, dass** das Tassenpodest (12) und die Tropfschale (4) einteilig, insbesondere sogar einstückig, ausgebildet sind.

6. Kaffeeautomat nach Anspruch 4 oder 5, **dadurch gekennzeichnet, dass** die Tresterschale (5), die Tropfschale (4) und das Tassenpodest (12) zumindest im Wesentlich dieselbe Höhe aufweisen.

7. Kaffeeautomat nach einem der vorhergehenden Ansprüche, **dadurch gekennzeichnet, dass** die Tresterschale (5) und die Tropfschale (4) über eine Klemm- oder Clipsverbindung (14) miteinander verbünden sind.

8. Kaffeeautomat nach einem der Ansprüche 1 bis 7, **dadurch gekennzeichnet, dass** die Abstreifkante (9) im Querschnitt kreissegmentförmig ausgebildet ist.

## Claims

1. Coffee machine (1) with a housing (2), a brewing unit (3) and with a drip tray (4) and a container for coffee grounds, wherein the container for coffee grounds is embodied as a tray for coffee grounds (5) and is fastened to the rear of the drip tray (4), so that these can be removed together from the housing (2) and can be reinserted herein, **characterised in that** the tray for coffee grounds (5) essentially has the height of the drip tray (4) and comprises a front and rear segment (6, 7) and wherein when the drip tray and tray for coffee grounds (4, 5) are integrated, a coffee grounds collecting chamber (8) is arranged above the front segment (6) of the tray for coffee grounds (5) and has a striking-off edge (9) at the bottom so that when the drip tray and tray for coffee grounds (4, 5) are removed, a stack of coffee grounds (10) collected in the coffee grounds collecting chamber (8) is distributed via the striking-off edge (9) onto the front and rear segment (6, 7) of the tray for coffee grounds (5).

2. Coffee machine according to claim 1, **characterised in that** the drip tray (4) and the tray for coffee grounds (5) are embodied separably from one another.

3. Coffee machine according to claim 1 or 2, **characterised in that** the striking-off edge (9) is fastened detachably to the housing (2) of the coffee machine (1).

4. Coffee machine according to one of claims 1 to 3, **characterised in that** a cup stand (12) is arranged on the drip tray (4).

5. Coffee machine according to claim 3, **characterised in that** the cup stand (12) and the drip tray (4) are embodied in one piece, in particular even integrally.

6. Coffee machine according to claim 4 or 5, **characterised in that** the tray for coffee grounds (5), the drip tray (4) and the cup stand (12) have at least essentially the same height.

7. Coffee machine according to one of the preceding claims, **characterised in that** the tray for coffee grounds (5) and the drip tray (4) are connected to one another by way of a clamping or clip connection (14).

8. Coffee machine according to one of claims 1 to 7, **characterised in that** the striking-off edge (9) is embodied to have a circular segment shape cross-sectionally.

## Revendications

1. Machine à café automatique (1) avec une carcasse (2), une unité d'échaudage (3) ainsi qu'avec un égouttoir (4) et un récipient à marc, dans lequel le récipient à marc est exécuté sous forme de bac à marc (5) et fixé à l'arrière de l'égouttoir (4), de sorte qu'ils puissent être retirés conjointement de la carcasse (2) et replacés dans celle-ci, **caractérisée en ce que** le bac à marc (5) présente essentiellement la hauteur de l'égouttoir (4) et comprend un segment avant et un segment arrière (6, 7) et dans lequel, lorsque l'égouttoir et le bac à marc (4, 5) sont en place, un espace de collecte de marc (8) est disposé au-dessus du segment avant (6) du bac à marc (5), lequel espace présente un bord racleur (9) sur le bas, de sorte que lors d'une extraction de l'égouttoir et du bac à marc (4, 5), un amoncellement de marc (10) collecté dans l'espace de collecte de marc (8) est réparti par le bord racleur (9) sur le segment avant et le segment arrière (6, 7) du bac à marc (5).

2. Machine à café automatique selon la revendication 1, **caractérisée en ce que** l'égouttoir (4) et le bac à marc (5) sont exécutés de façon séparable l'un de l'autre.

3. Machine à café automatique selon la revendication 1 ou 2, **caractérisée en ce que** le bord racleur (9) est fixé de façon amovible à la carcasse (2) de la machine à café automatique (1).

4. Machine à café automatique selon l'une des revendications 1 à 3, **caractérisée en ce qu'**un support de tasse (12) est disposé sur l'égouttoir (4).

5. Machine à café automatique selon la revendication 3, **caractérisée en ce que** le support à tasse (12) et l'égouttoir (4) sont exécutés sous forme monobloc, en particulier même en une seule pièce.

6. Machine à café automatique selon la revendication 4 ou 5, **caractérisée en ce que** le bac à marc (5), l'égouttoir (4) et le support à tasse (12) présentent au moins essentiellement la même hauteur.

7. Machine à café automatique selon l'une des revendications précédentes, **caractérisée en ce que** le bac à marc (5) et l'égouttoir (4) sont reliés l'un à l'autre via une jonction par serrage ou clipsage (14).

8. Machine à café automatique selon l'une des revendications 1 à 7, **caractérisée en ce que** le bord racleur (9) est exécuté avec une section en segment de cercle.
